# EUROPEAN PATENT SPECIFICATION

(11) **EP 2 210 748 B1**
(45) Date of publication and mention of the grant of the patent: **10.04.2019**
(21) Application number: 08849100.6
(22) Date of filing: 13.11.2008
(51) Int. Cl.: C09J 7/00

(54) **ADHESIVE SHEET AND LAMINATE THEREOF**
KLEBEFOLIE UND LAMINAT DAFÜR
FEUILLE ADHÉSIVE ET SON STRATIFIÉ

(30) Priority: 13.11.2007 JP 2007294581
(43) Date of publication of application: 28.07.2010
(73) Proprietor: Kokuyo Co., Ltd., Osaka 537-8686 (JP)
(72) Inventor: OKITSU, Akinori, Osaka-shi Osaka 537-8686 (JP); NABETANI, Hitomi, Osaka-shi Osaka 537-8686 (JP)
(74) Representative: Grünecker Patent- und Rechtsanwälte PartG mbB
(86) International application number: PCT/JP2008/070667
(87) International publication number: WO 2009/063936

(56) References cited:
- JP-A- 11 139 063
- JP-A- 2003 253 227
- JP-U- 03 115 639
- JP-U- 07 002 451
- JP-U- 50 108 961
- US-B1- 6 789 593

## Description

### TECHNICAL FIELD

The present invention relates to an adhesive sheet and a laminate comprising laminated adhesive sheets. It relates in particular to an adhesive sheet, such as a patch, which is suitable for reinforcing an area around a binding hole formed in an adherend such as a sheet of paper by sticking the adhesive sheet in a location that surrounds the hole, and a laminate thereof.

### BACKGROUND ART

In putting sheets of paper such as documents into a file, a method has been adopted which includes forming holes along an end edge of the paper by using a punch, and inserting binding bands or binding shaft of a binder through the punched holes. In such binding method, an area around a hole of the paper may be tore due to frequent flipping of papers or the like. Therefore, it has been carried out to reinforce the hole by sticking a patch so as to surround the hole.

The above mentioned patch uses patches having the following structure: an adhesive agent layer is provided on one surface of a base sheet made of a resin, as an adhesive surface; and a peeling treated layer is provided by applying a silicone resin or the like on the other surface thereof. This patch has a substantially doughnut shape in which a circular hole corresponding to the hole formed in the paper is formed in the central region, and the shape of the outer thereof is circular. A laminate, in which a number of such patches are stacked together, is loaded into a patch sticking device. In such a state, a user can stick a patch to the area around the hole of the paper by pressing an adhesive surface, which is exposed on one end side of the laminate, against the area.

However, in the known patch, the adhesive surface is formed by applying an adhesive agent layer over the entire area of one surface of the base sheet. Therefore, the known patch has a disadvantage that there are occasions where the patch is not peeled sheet by sheet when the adhesive surface exposed on the one end side of such patch laminate is pressed against the area around the hole of the paper, and subsequently the pressing force is removed, so that a plurality of patches are stuck with the patches stacked together, and the patches are wasted.

Such sticking of patches which are stacked together seems to be due to the adhesive agent applied over the entire area of the one surface of the base sheet. JP H11 139063 A discloses a patch in which the adhesive surface is formed by partially applying an adhesive agent.

### SUMMARY OF THE INVENTION

### PROBLEMS TO BE SOLVED BY THE INVENTION

Although the patch disclosed in JP H11 139063 A has the adhesive surface configured by partially applying the adhesive agent, the locations or places, where the adhesive agent is applied, have no regularity. In other words, the applied adhesive agent is randomly positioned. Therefore, for example, in the patch sticking device configured to begin the peeling of the patch from an outer circumference side of the patch, the patch can not always be peeled from the next patch under a certain condition when the pressing force is applied to the patch and subsequently the force is removed.

Thus, peeling of the patch sheet by sheet may not be ensured.

### [Object of the Invention]

The present invention is made in view of such disadvantages, and has its object to provide an adhesive sheet and a laminate comprising laminated adhesive sheets which are suitable for peeling and sticking of an adhesive sheet such as a patch, sheet by sheet, in sticking of the adhesive sheet to an adherend by using a laminate of adhesive sheets, and which can realize the peeling thereof sheet by sheet by maintaining equal peel resistance when using a sticking device adapted to peel, in a line symmetric manner, an adhesive sheet to be stuck to the adherend from the next adhesive sheet which is stacked thereon.

### MEANS TO SOLVE THE PROBLEMS

According to the present invention, the above object is achieved by means of an adhesive sheet having the features of claim 1, and by a laminate comprising laminated adhesive sheets having the features of claim 7. Preferred embodiments of the adhesive sheet according to the present invention are contained in claims 2 to 6.

According to a preferred configuration, an adhesive sheet comprises: a base sheet, one surface thereof being an adhesive surface and the other surface thereof being a peeling treatment surface, in which the adhesive sheet is peelable, sheet by sheet, from a laminate by adhering the adhesive surface of the adhesive sheet positioned on one end side of the laminate to an adherend, the laminate being configured by forming a plurality of such adhesive sheets, and by stacking the adhesive surface of each of the adhesive sheets on the peeling treatment surface of each of the adhesive sheets together;
wherein the adhesive surface is formed from a number of adhesive agent portions with an adhesive agent dispersively-applied, the adhesive agent portions being arranged in a line symmetric manner.

Moreover, in a further preferred
configuration, an adhesive sheet comprises: a base sheet, one surface thereof being an adhesive surface and the other surface thereof being a peeling treatment surface, in which the adhesive sheet is peelable, sheet by sheet, from a laminate by adhering the adhesive surface of the adhesive sheet positioned on one end side of the laminate to an adherend, the laminate being configured by forming a plurality of such adhesive sheets, and by stacking the adhesive surface of each of the adhesive sheets on the peeling treatment surface of each of the adhesive sheets together;
wherein the adhesive surface is formed from a number of adhesive agent portions with an adhesive agent dispersively-applied, the adhesive agent portions being arranged in a point symmetric manner.

According to a further preferred configuration, an adhesive sheet comprises: a base sheet, one surface thereof being an adhesive surface and the other surface thereof being a peeling treatment surface, in which the adhesive sheet is peelable, sheet by sheet, from a laminate by adhering the adhesive surface of the adhesive sheet positioned on one end side of the laminate to an adherend, the laminate being configured by forming a plurality of such adhesive sheets, and by stacking the adhesive surface of each of the adhesive sheets on the peeling treatment surface of each of the adhesive sheets together;
wherein the adhesive surface is formed from a number of adhesive agent portions with an adhesive agent dispersively-applied, the adhesive agent portions being arranged along a plurality of circumferential loci which are substantially concentric circles with respect to the center of the base sheet, and the adhesive agent portions on the circumferential loci being provided at equally-spaced intervals from each other.

Moreover, in a further preferred
configuration, an adhesive sheet comprises: a base sheet, one surface thereof being an adhesive surface and the other surface thereof being a peeling treatment surface, in which the adhesive sheet is peelable, sheet by sheet, from a laminate by adhering the adhesive surface of the adhesive sheet positioned on one end side of the laminate to an adherend, the laminate being configured by forming a plurality of such adhesive sheets, and by stacking the adhesive surface of each of the adhesive sheets on the peeling treatment surface of each of the adhesive sheets together;
wherein the adhesive surface is formed from a number of adhesive agent portions with an adhesive agent dispersively-applied, and has regions with narrow and wide spacing relative to one another of the adhesive agent portions, the adhesive agent portions of the region with the wide spacing relative to one another being arranged in a line or a point symmetric manner, or arranged at equally-spaced intervals relative to one another along a plurality of circumferential loci which are substantially concentric circles with respect to the center of the base sheet.

According to a further preferred configuration, an adhesive sheet comprises: a base sheet, one surface thereof being an adhesive surface and the other surface thereof being a peeling treatment surface, in which the adhesive sheet is peelable, sheet by sheet, from a laminate by adhering the adhesive surface of the adhesive sheet positioned on one end side of the laminate to an adherend, the laminate being configured by forming a plurality of such adhesive sheets, and by stacking the adhesive surface of each of the adhesive sheets on the peeling treatment surface of each of the adhesive sheets together;
wherein the adhesive surface is formed from a number of adhesive agent portions with an adhesive agent dispersively-applied,
and has regions with narrow and wide spacing relative to one another of the adhesive agent portions, the adhesive agent portions in at least one region of the regions are arranged at equally-spaced intervals on a straight-line or a circumference of a circle.

Moreover, in a further preferred configuration, an adhesive sheet comprises: a base sheet, one surface thereof being an adhesive surface and the other surface thereof being a peeling treatment surface, in which the adhesive sheet is peelable, sheet by sheet, from a laminate by adhering the adhesive surface of the adhesive sheet positioned on one end side of the laminate to an adherend, the laminate being configured by forming a plurality of such adhesive sheets, and by stacking the adhesive surface of each of the adhesive sheets on the peeling treatment surface of each of the adhesive sheets together;
wherein the adhesive surface is formed from a number of adhesive agent portions with an adhesive agent dispersively-applied,
each of regions with narrow and wide adhesive agent portions is dispersively provided in a pair and in a plurality of places, at least one pair of the dispersed regions being provided in a line or a point symmetric manner.

In a further preferred configuration, the adhesive surface has regions with narrow and wide spacing relative to one another of the adhesive agent portions.

Moreover, in a further preferred configuration, the adhesive agent portions each have a substantially point-like or a substantially water droplet-like planar shape, the adhesive agent portions having the substantially same size.

Moreover, in a further preferred configuration, the adhesive agent portions each have a substantially point-like or a substantially water droplet-like planar shape, the adhesive agent portions
having a combination of the adhesive agent portions of different large and small sizes.

According to a further preferred configuration, the adhesive agent portions provided along the plurality of circumferential loci are arranged and aligned on a straight-line which radially extends from the center of the base sheet.

Moreover, in a further preferred configuration, adhesive agent portions, positioned on the concentric circle on an outer circumference side of the base sheet, of the adhesive agent portions provided along the plurality of circumferential loci are configured to have wider spacing relative to one another than adhesive agent portions positioned on the concentric circle on an inner circumference side.

According to a further preferred configuration, the adhesive sheet comprises a region where spacing relative to one another between the adhesive agent portions is configured to be substantially equal.

Moreover, in a further preferred configuration, the base sheet has a planar shape with a hole formed in the center in plane, and there are no the adhesive agent portions in an inner and/or an outer circumferences of the base sheet.

Further, the sum of the area of the adhesive agent portions may be set to 30 percent or more of the area of the base sheet, and less than 75 percent of the area of the base sheet.

In a further preferred configuration, the base sheet has a planar shape in which a hole is formed in the center in plane, and the shape of an outer edge thereof is substantially circular.

Moreover, according to a preferred configuration, a laminate comprises: laminated adhesive sheets, each adhesive sheet being according to any one above mentioned, wherein the adhesive sheets are laminated in a state where the position of the adhesive agent portions of each adhesive sheet is stacked together along a lamination direction.

### EFFECTS OF THE INVENTION

According to the adhesive sheets of the present invention, the peel resistance between the adhesive sheets is reduced so that the peeling can be performed sheet by sheet, compared to adhesive sheets in which an adhesive surface is formed with an adhesive agent applied all over the surface, because there are provided a number of the adhesive agent portions with adhesive agent dispersively-applied under a condition having a certain regularity. In particular, according to a configuration in which the adhesive agent portions are arranged in a line or a point symmetric manner, peel resistances in both sides, which are symmetrical with respect to a line or a point, are equal, and thus the sheet can be peeled in a balanced manner when such configuration is applied to the sticking device provided such that the sheet can be peeled from either side of the adhesive sheets. This can solve a disadvantage in that a plurality of adhesive sheets is stuck with the sheets stacked together.

Moreover, the peel resistance can also be kept in a balanced manner by a configuration in which the adhesive agent portions are arranged along a plurality of circumferential loci which are substantially concentric circles with respect to the center of the base sheet, and the adhesive agent portions on each circumferential locus are provided at equally-spaced intervals from
each other. This configuration further can simplify adhesive agent patterns to be applied.

In a configuration in which the adhesive surface has regions with narrow and wide spacing relative to one another of the adhesive agent portions, the adhesive agent portions of the region with the wide spacing being arranged in a line or a point symmetric manner, or arranged at equally-spaced intervals from each other along a plurality of circumferential loci which are substantially concentric circles with respect to the center of the base sheet, the peeling can be performed at lower peel resistance by beginning the peeling from the region with the wide spacing. Moreover, in a configuration in which the adhesive agent portions in at least one region of the regions with the narrow and wide spacing is arranged at equally-spaced intervals on a straight-line or a circumference of a circle, the peeling can be performed in a balanced manner by peeling from the region where the adhesive agent portions are arranged at the equally-spaced intervals.

In a configuration in which each of regions with narrow and wide adhesive agent portions is dispersively provided in a pair and in a plurality of places, at least one pair of the regions being provided in a line or a point symmetric manner, the peeling can be smoothly performed by beginning peeling from the region arranged in the line or point symmetric manner.

According to the configuration in which the adhesive agent portions each have a substantially point-like or a substantially water droplet-like planar shape, the adhesive agent portions having the substantially same size, an adhesive force of the adhesive sheet can be dispersed in a stable state. Further, secondary effect is also obtained which leads to a simplification of a configuration of the apparatus for applying the adhesive agent to the base sheet.

In a configuration in which the adhesive agent portions have a combination of the adhesive agent portions of different large and small sizes, the peel resistance in sticking of the adhesive sheet is decreased, so that the adhesive sheet can be stuck sheet by sheet, by, for example, providing, on an outer circumference side thereof, a region with small adhesive agent portions dispersed.

According to a configuration in which the adhesive agent portions are positioned on a straight-line which radially extends from the center of the base sheet, there is agreement between a peeling direction and a direction of arrangement of the adhesive agent portions, and therefore this can realize smooth peeling.

In a configuration in which adhesive agent portions positioned on a concentric circle near an outer circumference of the base sheet are configured to have wider spacing relative to one another than adhesive agent portions positioned on an inside concentric circle, easy of peeling on an outer circumference side thereof may be improved.

The easy of peeling also can be ensured by providing a region where there are no the adhesive agent portions in an inner and/or an outer circumferences of the base sheet with a hole formed in the center in plane. Thus, the adhesive agent is surely prevented from protruding out of the inner and outer circumferences of the adhesive sheet e.g. in a stringy state. Therefore, this also can solve a disadvantage in that the adhesive sheets are peeled with the sheets stacked together.

By setting the sum of the area of the adhesive agent portions to 30 percent or more of the area of the base sheet, and less than 75 percent of the area of the base sheet, it is possible to reduce adhesive agent usage, while maintain a certain adhesive force against an adherend, and furthermore avoid a disadvantage of too much strong peel resistance. In less than 30 percent, the adhesive force is insufficient when the adhesive sheet is stuck to the adherend such as documents. In 75 percent or more, too much strong peel resistance considerably affects the peeling sheet by sheet.

In the case where a hole is formed in plane of the base sheet, and the shape of the outer edge thereof is substantially circular, the following is achieved. A holding structure, where it is applied to a patch sticking device, or the like, can be simplified. Moreover, freedom of starting position of the peeling can be obtained.

Further, the laminate of the present invention can always maintain a certain condition of the peeling because the adhesive agent portions in each adhesive sheet are laminated so as to be stacked in a lamination direction.

It is noted herein that the term "point-like" includes any object having a certain extension, such as one which is larger than a dot printed by any printer, even when the shape of the outer edge thereof is not circular. The term "water droplet-like" includes any outside shapes such as somewhat flattened circular shapes, for example, elliptical shapes, fan shapes, and other shapes similar thereto.

### BRIEF DESCRIPTION OF THE DRAWINGS

Fig. 1(a) is a front view of a main part of a patch sticking device; and Fig. 1(b) is a partially enlarged side view of the patch;
Fig. 2 is a bottom view of Fig. 1(a);
Fig. 3 is a longitudinal cross-section view of Fig. 1(a);
Fig. 4 is a longitudinal cross-section view showing a state of sticking of the patch;
Fig. 5 is a cross-section view showing a state in which the stuck patch is being peeled;
Figs. 6(a) to (f) are plan views of a patch according to an embodiment as viewed from an adhesive surface side of the patch;
Figs. 7(g) to (1) are plan views of another patch according to an embodiment as viewed from an adhesive surface side thereof; and
Figs. 8(m) to (q) are plan views of further another patch according to an embodiment as viewed from an adhesive surface side thereof.

### DESCRIPTION OF REFERENCE NUMERAL

- 10: sticking device
- A: adhesive surface
- A1: adhesive agent portion
- B: base sheet
- D1, D2: straight-line
- L: peeling treated surface
- S: paper (adherend)
- S1: hole
- P: patch
- P1: patch laminate
- P2: aperture

### BEST MODE FOR WORKING THE INVENTION

An embodiment of an adhesive sheet according to the present invention will be described below with reference to drawings.

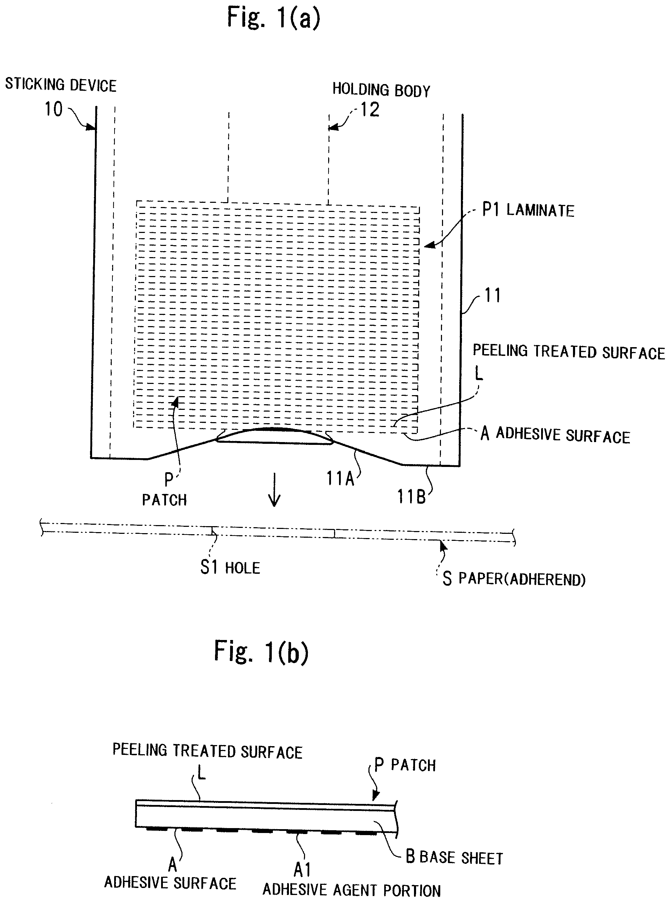

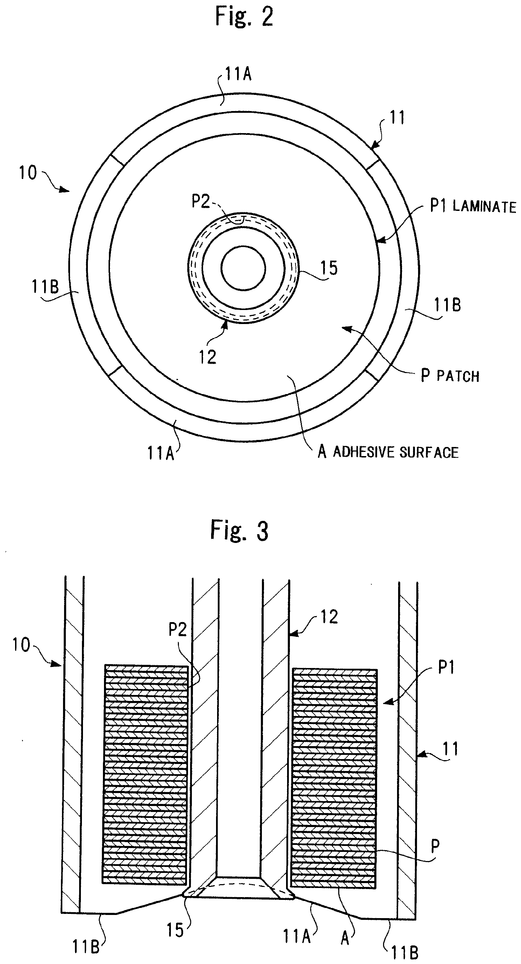

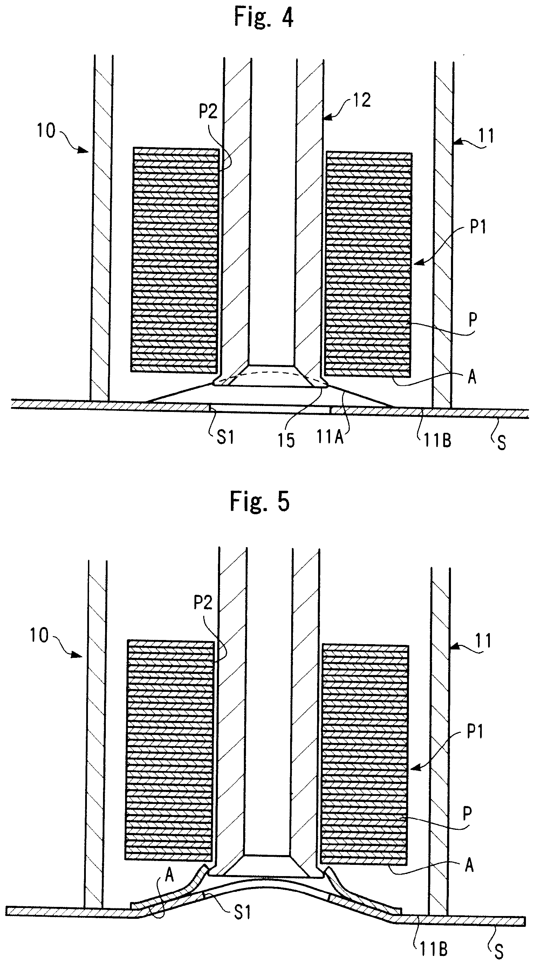

Figs. 1(a) and (b) show a front view of a main part of a patch sticking device for sticking a patch, to which adhesive sheets according to the present invention are applied, and a partial side view of the patch, respectively. Fig. 2 shows a bottom view of the patch sticking device. Figs. 3 to 5 show cross-section views of the main part of the patch sticking device. In these drawings, a patch sticking device 10 comprises a substantially cylinder-shaped case 11, and a shaft-like holding body 12 for holding a laminate P1 of patches P inside the case 11.

The case 11 has a shape having substantially circular arc-shaped notches 11A in 180 degree symmetry positions in a lower end part of a peripheral wall of the case 11. A lower end 11B of the case 11 except regions with the notches 11A formed acts as a region for holding down a sheet of paper S (adherend) when the patch P is stuck to an area around a hole S1 of the paper S. On the other hand, the notches 11A are regions that permit the paper S to be lifted up when a pressing force in sticking of the patch P is removed. The paper S is lifted up and curved along the notches 11A, so that a first patch P which has been stuck is also curved together with the paper S, and this facilitates peeling of the first patch P from a next patch P.

The holding body 12 has a cylindrical shape having an outer diameter which is slightly smaller than the inner diameter of a circular aperture P2 provided in the center of the patch P. The holding body 12 has an annular protrusion 15 formed in a lower end part of the holding body 12, the annular protrusion 15 being slightly larger than the inner diameter of the aperture P2. The annular protrusion 15 restricts dropping of the laminate P1 of the patches P, and provides a certain resistance to the next patch P to prevent the next patch P from falling out when the first patch P is stuck to the paper S.

The laminate P1 includes a number of patches P being mutually-stacked together, and is installed in the holding body 12 in a state where an adhesive surface A is positioned on the lower surface side in Fig. 1(a), while a peeling treated surface L is positioned on the upper surface side in Fig. 1(a). Each patch P, as shown in Fig. 1(b), includes: the adhesive surface A formed by dispersively-applying an adhesive agent on one surface of a base sheet B made of a resin and forming a number of adhesive agent portions A1; and the peeling treated surface L made of a silicone resin or the like on the other surface of the base sheet B. The laminate P1 is configured by laminating the patches P such that the adhesive agent portions A1 on each patch P are substantially stacked in a lamination direction. This avoids the variations in peel resistance when each patch P is peeled.

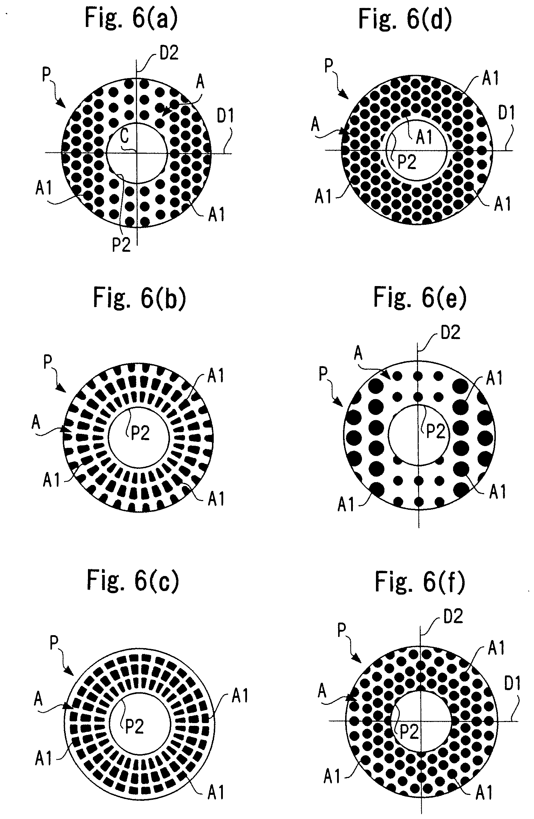

The adhesive surface A is formed from a number of the adhesive agent portions A1 with adhesive agent dispersively-applied, as shown in Fig. 6(a). An individual adhesive agent portion A1 is provided in the form of a dot, and the adhesive agent portions A1 are provided in the substantially same shape and area except on an inner and an outer circumference sides, as well as arranged in a line symmetric manner with respect to a straight-line D1 in a left-right direction passing through the center C of the patch P, and also arranged in a line symmetric manner with respect to a straight-line D2 in an up-and-down direction. Further, the adhesive agent portions A1 are arranged in a point symmetric manner with respect to the center C. Moreover, the adhesive agent portions A1 arranged in regions on both right and left sides in Fig. 6(a) are provided in a high density so as to have a relatively narrow spacing relative to one another, compared to the adhesive agent portions A1 arranged in intermediate regions thereof. i.e. upper and lower regions of the aperture P2. The adhesive agent portions A1 having the narrow spacing relative to one another are provided at substantially equally-spaced intervals on a straight-line along the up-and-down direction. The adhesive agent portions A1 in the intermediate regions is also provided at substantially equally-spaced intervals in the up-and-down direction. Moreover, the adhesive agent portions A1 in a region with a wide spacing relative to one another, i.e. a low density region are arranged in a line or a point symmetric manner. The patch P having such configuration has a low peel resistance region on an upper and lower sides of the central region in Fig. 6(a), so that the peeling thereof sheet by sheet can be ensured to stick the patch P by loading the laminate into the patch sticking device 10 so as to begin the peeling from an outer circumference side of such regions.

A variety of types of the patch P may be used in which the adhesive agent portions A1 are arranged under a relation having line symmetry with respect to a straight-line passing through the center C of the patch P, a relation having point symmetry with respect to the center C of the patch P, and other condition having a certain regularity, as shown in Figs. 6(b) to (f), 7(g) to (l), and 8(m) to (q). For arrangements having a number of center lines in which the adhesive agent portions A1 are arranged in a line symmetric manner, clearly illustrations of the lines are omitted for preventing drawings from being complicated.

A patch P as shown in Fig. 6(b) has a feature as follows: the patch P comprises, on an inner circumference side surrounding the aperture P2, a closed loop-like non-adhesive region where there are no the adhesive agent portions A1; and each adhesive agent portion A1 is provided so as to have a substantially water droplet-like planar shape. Each of such adhesive agent portions A1 is arranged at equally-spaced intervals on three circumferential loci positioned on concentric circles, and arranged and aligned on a straight-line which radially extends. The adhesive agent portions A1 that are positioned on the innermost circumferential locus are provided so as to be relatively small, and spacing relative to one another of the adhesive agent portions A1 that are positioned on the circumferential locus on the outer circumference side is provided so as to be relatively wide and equally-spaced intervals. As clearly seen from Fig. 6(b), the adhesive agent portions A1 in this type of the patch P, have line symmetry with respect to a number of straight-lines, each straight-line being the center of the line symmetry, and point symmetry with respect to the center C. Therefore, there is little constraint on the orientation of the patch laminate P in a circumferential direction when the patch laminate P is loaded into the patch sticking device 10 as mentioned above.

A patch P shown in Fig. 6(c) is a modification of the patch P shown in Fig. 6(b). The patch P shown in Fig. 6(c) is provided with, also on the outer circumference side thereof, a closed loop-like non-adhesive region where there are no the adhesive agent portions A1. The adhesive agent portions A1 on three circumferential loci each are provided at equally-spaced intervals. The patch P in Fig. 6(c) makes it much easy to peel from any location on the outer circumference side. Moreover, the adhesive agent portions A1 in this patch P also have line symmetry with respect to a number of straight-lines, each straight-line being the center line of such line symmetry arrangement, and point symmetry with respect to the center C. It is noted that in such patch P, the length, along a radiation direction, of the adhesive agent portion A1 on the outer circumference side is designed to be slightly shorter than that of the adhesive agent portion A1 on the inner side. Thus, the patch P has combinations of different size and shape of the adhesive agent portions A1. It is noted that although the adhesive agent portion A1 on the outer circumference side appears to approximate a quadrilateral in a planar shape, each corner thereof has a curved shape.

In a patch P shown in Fig. 6(d), a number of point-like adhesive agent portions A1 are arranged, wherein spacing relative to one another of the adhesive agent portions A1 that are aligned in an up-and-down direction on a right end side in Fig. 6(d) is provided so as to be relatively wide to decrease the density thereof. Such patch P has the adhesive agent portions A1 arranged so as to have line symmetry with respect to a straight-line D1 extending in a left-right direction in Fig. 6(d), and comprises, on the inner circumference side surrounding the aperture P2, a closed loop-like non-adhesive region where there are no the adhesive agent portions A1. The patch P has the smallest peel resistance in the right side region in Fig. 6(d). This can facilitate the peeling thereof by peeling from such region. It is noted that each of adhesive agent portions A1 in a high and a low density regions is provided at equally-spaced intervals along the direction perpendicular to the straight-line D1. In particularly, in the high density region, each of the adhesive agent portions A1 is provided at equally-spaced intervals in relation to adhesive agent portions adjacent to each other in a left-right direction as well.

A patch P shown in Fig. 6(e) has a feature as follows: different large and small point-like adhesive agent portions A1 are formed. The adhesive agent portions A1 are arranged so as to have line symmetry with respect to a straight-line D2. This type of patch P is configured such that the size of the adhesive agent portions A1 in regions on both upper and lower sides of the aperture P2 has smaller shape than the adhesive agent portions A1 in regions on both left and right sides thereof; and is larger than spacing relative to one another of the adhesive agent portions A1 in the regions on both left and right sides thereof. Therefore, regions that are particularly easy to peel are formed in the upper and lower sides in Fig. 6(e). The adhesive agent portions A1 in each region have equally-spaced intervals, and are provided in a line symmetric manner.

A patch P shown in Fig. 6(f) has a feature as follows: the point-like adhesive agent portions A1 having the substantially same size are arranged so as to have line symmetry with respect to straight-lines D1 and D2, and point symmetry with respect to the center C; and low density regions of the adhesive agent layer A1 are provided in a plurality of places on the outer circumference side and have a relation in which pairs are made with respect to the center. In such configuration, also, the patch can be easily peeled from the low density region. In is noted that the adhesive agent portions A1 in high density regions are provided at equally-spaced intervals on a straight-line along the straight-line D2, wherein in such region, adhesive agent portions A1 adjacent to one another on the left and right thereof are also provided at equally-spaced intervals.

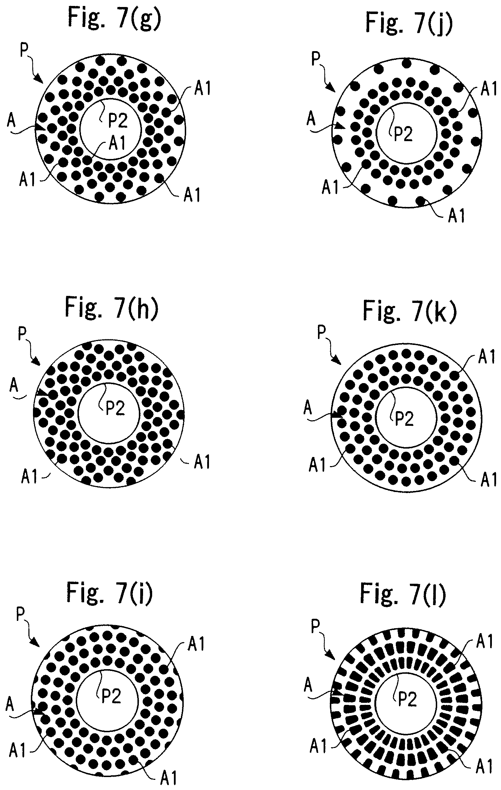

Figs. 7(g) and (h) have a feature as follows: the point-like adhesive agent portions A1 having the substantially same size are provided in a line symmetric manner with respect to a plurality of straight-lines (not shown) and in a point symmetric manner such that the density of the adhesive agent portions A1 is relatively decreased with increasing distance toward the outer circumference side; and a closed loop-like non-adhesive region where there are no the adhesive agent portions A1 is provided on the inner circumference side; and the adhesive agent portions A1 on a concentric circle are arranged at equally-spaced intervals, and the adhesive agent portions A1 on a circumference of a circle in a low density region are arranged at relatively wide and equally-spaced intervals. In such patch P, also, a number of regions that are easy to peel are formed on the outer circumference side, so that sticking sheet by sheet may be facilitated.

A patch P shown in Fig. 7(i) has a feature as follows: the point-like adhesive agent portions A1 having the same shape are arranged at equally-spaced intervals on a plurality of circumferential loci positioned on concentric circles; and outermost adhesive agent portions A1 are provided in a cut shape that has not more than half the size. Moreover, spacing relative to one another of the outermost adhesive agent portions A1 is provided to be larger than spacing relative to one another of each adhesive agent portion A1 positioned on a concentric circle on the inner circumference side thereof. Moreover, a closed loop-like non-adhesive region where there are no the adhesive agent portions A1 is formed on the inner circumference side. In this type of patch P, the peeling can be easily performed over the substantially entire area of the outer circumference because an outer circumferential adhesive agent portion A1 is extremely small, and the spacing is relatively wide. In addition, it is possible to maintain an adhesion force on the outer circumference side after adhering of the patch.

A patch P shown in Fig. 7(j) has a feature as follows: the point-like adhesive agent portions A1 having the same shape are arranged at equally-spaced intervals on a plurality of concentric circles; spacing relative to one another of the adhesive agent portions A1 on the outer circumference side is configured to be larger than spacing relative to one another of adhesive agent portions A1 on the inner circumference side; and the total area of the adhesive agent portions A1 is relatively small. Moreover, a closed loop-like non-adhesive region where there are no the adhesive agent portions A1 is formed on the inner circumference side. This type of patch P also makes it easy to peel from any location on the outer circumference side.

A patch P shown in Fig. 7(k) is a variation of the patch P in Fig. 7(i), and has a feature as follows: closed loop-like non-adhesive regions where there are no the adhesive agent portions A1 are provided on the inner and outer circumference sides.

A patch P shown in Fig. 7(l) is a variation of Fig. 6(b), and has a feature as follows: adhesive agent portions A1 are arranged in relation to equally-spaced intervals on each of three circumferential loci. This substantially produces an operation and effect similar to Fig. 6(b).

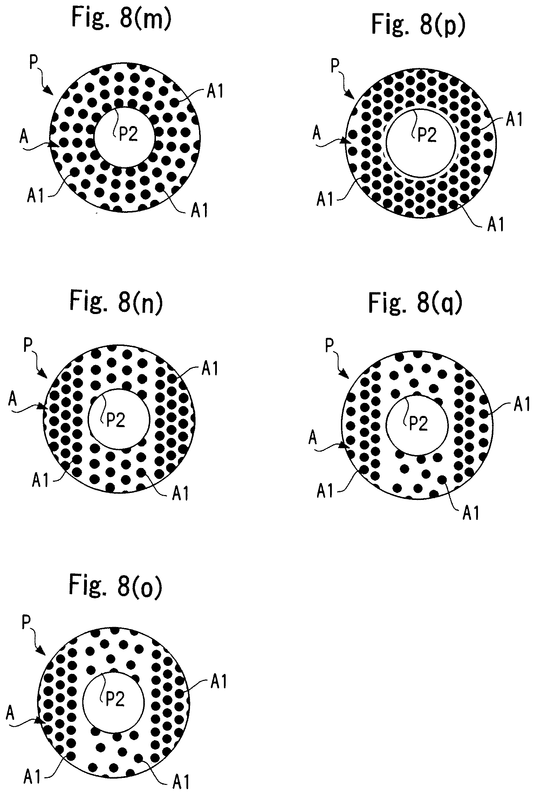

A patch P shown in Fig. 8(m) has a feature as follows: the point-like adhesive agent portions A1 having the same size are arranged in a point symmetric manner. An outermost circumferential adhesive agent portion A1 is about half the size. Two adhesive agent portions A1 close to each other are configured at large spacing relative to two adhesive agent portions A1 adjacent in a circumferential direction. Therefore, it is easy to peel from a part where such large spacing is configured. In particular, in regions on the outer circumference side where the spacing relative to one another is large, the adhesive agent portions A1 are arranged in a line or a point symmetric manner. The adhesive agent portions A1 except the outermost circumferential adhesive agent portions A1 are arranged at equally-spaced intervals in the circumferential direction.

A patch P shown in Fig. 8(n) has a feature as follows: the point-like adhesive agent portions A1 having the substantially same size are arranged on a straight-line along an up-and-down direction in Fig. 8(n); and spacing relative to one another of the adhesive agent portions A1 in regions on both left and right sides is configured to be smaller than that of the adhesive agent portions A1 in regions on both upper and lower sides in a center, so that such adhesive agent portions A1 are provided with high density. Moreover, the adhesive agent portions A1 in regions on both left and right sides are arranged in a line symmetric manner, and provided in a relation in which regions with wide and narrow spacing relative to one another make a pair. It is noted that each adhesive agent portion A1 within each region is provided at equally-spaced intervals along a straight-line along an up-and-down direction.

A patch P shown in Fig. 8(o) is a variation of Fig. 8(n). The adhesive agent portions A1 within high density regions are arranged at equally-spaced intervals along a straight-line along an up-and-down direction in Fig. 8(o).

A patch P shown in Fig. 8(p) has a feature as follows: spacing relative to one another of the adhesive agent portions A1 that are aligned in an up-and-down direction on both left and right end sides is relatively widely configured; and on the other hand, spacing relative to one another of the other adhesive agent portions A1 except the adhesive agent portions A1 on the both end sides are configured relatively narrowly and at equally-spaced intervals so that the adhesive agent portions A1 are arranged in a line symmetric manner in a left-right direction. Moreover, such patch P comprises a non-adhesive region where there are no the adhesive agent portions A1 on the inner circumference side. In particular, in both regions on both left and right end sides, the adhesive agent portions A1 are arranged in a line symmetric manner with respect to each other.

A patch P shown in Fig. 8(q) has a feature as follows: adhesive agent portions A1 dotted on upper and lower sides of the central region, adhesive agent portions A1 that are aligned in a up-and-down direction of both left and right ends, and adhesive agent portions A1 in two columns inside of the adhesive agent portions A1 of both left and right ends are arranged such that each has different density; and the adhesive agent portions A1 except the adhesive agent portions A1 on upper and lower sides of the central region are arranged at equally-spaced intervals on each straight-line along the up-and-down direction, so that the adhesive agent portions A1 are provided in a line symmetric manner in a left-right direction. This type of patch P is suitable for peeling from both upper and lower end sides of the central region or both left and right end sides thereof.

It is noted that any patch shown in Figs. 6 to 8 is configured such that the sum of the area of the adhesive agent portions A1 is 30 percent or more of the area of the base sheet B, and less than 75 percent of the base sheet B.

Although the best configuration, method, and the like for carrying out the invention have been disclosed in the above description, the invention is not limited thereto.

Thus, the invention has been particularly illustrated and described mainly in terms of a specific embodiment, but those skilled in the art may make various modifications to the embodiments described above in term of shapes, materials, quantities, and other detailed configurations without deviating from the scope of a technical idea and an object of the invention.

Accordingly, the description limiting the shapes, materials, and the like disclosed above is described as an example in order to facilitate understanding of the invention, and is not intended to limit the invention. Therefore, the descriptions of parts name without part or all of the limiting of the shapes, materials, and the like thereof are within the invention.

In the above embodiments, for example, although the patches P having a substantially circular outside shape have been illustrated and described, the planar shape of the patches P is not limited to a circle, and thus the patches P having various planar shapes may be used, such as polygonal shapes, and elliptical shapes. Moreover, the patches P may have no aperture P2 in the central part. Further, the shape, arrangement, or pattern of the adhesive agent portions A1 is just illustrated as an example, and thus other shape or arrangement may be adopted. In this case, individual adhesive agent portion A1 may have the shape of an outer edge surrounded by a curve line without a corner, and It is only necessary for the adhesive agent portions A1 to be arranged with a certain regularity such as a line or a point symmetric manner.

Moreover, in the above embodiments, although the case where the present invention is applied to the patch P which is stuck to the area around the hole S1 of the paper S has been described, various objects such as letter sheets may be applied as an adherend, for example.

## Claims

1. An adhesive sheet comprising: a base sheet (B), one surface thereof being an adhesive surface (A) and the other surface thereof being a peeling treatment surface (L), in which the adhesive sheet is peelable, sheet by sheet, from a laminate (P1) by adhering the adhesive surface (A) of the adhesive sheet positioned on one end side of the laminate (P1) to an adherend (S), the laminate (P1) being configured by forming a plurality of such adhesive sheets, and by stacking the adhesive surface (A) of each of the adhesive sheets on the peeling treatment surface (L) of each of the adhesive sheets together, wherein the base sheet (B) has a planar shape in which a hole is formed in the center in plane, and the shape of an outer edge thereof is substantially circular,
wherein the adhesive surface (A) is formed from a number of adhesive agent portions (A1) with an adhesive agent dispersively-applied,
**characterized in that**
the adhesive surface (A) has regions with narrow and wide spacing relative to one another of the adhesive agent portions (A1), each of regions is dispersively provided in a pair and in a plurality of places, and at least one pair of the dispersed regions is provided in a line symmetric manner with respect to a straight-line (D1, D2) passing through a center (C) of the base sheet (B), and in a point symmetric manner with respect to the center (C) of the base sheet (B).

2. The adhesive sheet according to Claim 1, wherein the adhesive agent portions (A1) each have a substantially point-like or a substantially water droplet-like planar shape, the adhesive agent portions (A1) having the substantially same size.

3. The adhesive sheet according to Claim 1, wherein the adhesive agent portions (A1) each have a substantially point-like or a substantially water droplet-like planar shape, the adhesive agent portions (A1) having a combination of the adhesive agent portions (A1) of different large and small sizes.

4. The adhesive sheet according to any one of Claims 1 to 3, comprising a region where spacing relative to one another between the adhesive agent portions (A1) is configured to be substantially equal.

5. The adhesive sheet according to any one of Claims 1 to 4, wherein the base sheet (B) has a planar shape with a hole formed in the center in plane, and there are no the adhesive agent portions (A1) in an inner and/or an outer circumferences of the base sheet (B).

6. The adhesive sheet according to any one of Claims 1 to 5, wherein the sum of the area of the adhesive agent portions (A1) is set to 30 percent or more of the area of the base sheet (B), and less than 75 percent of the area of the base sheet (B).

7. A laminate (P1), comprising: laminated adhesive sheets, each adhesive sheet being according to any one of Claims 1 to 6, wherein the adhesive sheets are laminated in a state where the position of the adhesive agent portions (A1) of each adhesive sheet is stacked together along a lamination direction.

## Patentansprüche

1. Klebefolie, mit:
einer Grundschicht (B), deren eine Oberfläche eine Klebefläche (A) ist, deren andere Oberfläche eine Ablösebehandlungsfläche (L) ist, in der die Klebefolie Schicht um Schicht von einem Laminat (P1) ablösbar ist, indem die Klebefläche (A) der Klebefolie, die auf einer Endeseite des Laminats (P1) angeordnet ist, an einem Haftmittel (S) angehaftet wird, wobei das Laminat (P1) gebildet wird, indem mehrere derartige Klebefolien gebildet werden und indem die Klebefläche (A) jeder Klebefolie auf der Ablösebehandlungsfläche (L) jeder Klebefolie zusammen geschichtet werden, wobei die Grundschicht (B) eine ebene Form hat, in der in der Mitte der Ebene ein Loch ausgebildet ist, und die Form eines Außenrandes im Wesentlichen kreisförmig ist,
wobei die Klebefläche (A) aus einer Reihe von Klebemittelbereichen (A1) gebildet ist, wobei ein Klebemittel dispergierend aufgebracht ist,
**dadurch gekennzeichnet, dass**
die Klebefläche (A) Gebiete mit schmalem und breitem Abstand der Klebemittelbereiche (A1) zueinander aufweist, wobei jedes Gebiet dispergierend in einem Paar und an mehreren Stellen vorgesehen ist, und mindestens ein Paar der dispergierenden Gebiete in einer liniensymmetrischen Weise in Bezug auf eine gerade Linie (D1, D2), die durch einen Mittelpunkt (C) der Grundschicht (B) verläuft, und in einer punktsymmetrischen Weise in Bezug auf den Mittelpunkt (C) der Grundschicht (B) vorgesehen ist.

2. Klebefolie nach Anspruch 1, wobei die Klebemittelbereiche (A1) jeweils eine im Wesentlichen punktartige oder im Wesentlichen wassertropfenartige ebene Form haben, und wobei die Klebemittelbereiche (A1) im Wesentlichen die gleiche Größe besitzen.

3. Klebefolie nach Anspruch 1, wobei die Klebemittelbereiche (A1) jeweils eine im Wesentlichen punktartige oder im Wesentlichen wassertropfenartige ebene Form haben, und die Klebemittelbereiche (A1) eine Kombination der Klebemittelbereiche (A1) mit unterschiedlichen großen und kleinen Abmessungen aufweisen.

4. Klebefolie nach einem der Ansprüche 1 bis 3, mit einem Gebiet, in welchem Abstände zwischen den Klebemittelbereichen (A1) relativ zueinander so gestaltet ist, dass sie im Wesentlichen gleich sind.

5. Klebefolie nach einem der Ansprüche 1 bis 4, wobei die Grundschicht (B) eine ebene Form hat, wobei ein Loch in der Mitte in der Ebene ausgebildet ist, und wobei keine Klebemittelbereiche (A1) an einem inneren und/oder einem äußeren Umfang der Grundschicht (B) vorhanden sind.

6. Klebefolie nach einem der Ansprüche 1 bis 5, wobei die Summe der Flächen der Klebemittelbereiche (A1) auf 30 % oder größer in Bezug auf die Fläche der Grundschicht (B) und auf kleiner als 75 % der Fläche der Grundschicht (B) festgelegt ist.

7. Laminat (P1), mit:
laminierten Klebefolien, wobei jede Klebefolie nach einem der Ansprüche 1 bis 6 ausgebildet ist, wobei die Klebefolien in einem Zustand laminiert sind, in welchem die Positionen der Klebemittelbereiche (A1) jeder Klebefolie entlang einer Laminierrichtung geschichtet angeordnet sind.

## Revendications

1. Feuille adhésive comprenant : une feuille de base (B), une des surfaces de celle-ci étant une surface adhésive (A) et l'autre surface de celle-ci étant une surface de traitement de décollage (L), où la feuille adhésive est décollable, feuille par feuille, d'un stratifié (P1) grâce à l'adhésion de la surface adhésive (A) de la feuille adhésive positionnée sur une face terminale du stratifié (P1) à un support d'adhérence (S), le stratifié (P1) étant conçu de façon à former une pluralité de ces feuilles adhésives, et l'empilement de la surface adhésive (A) de chacune des feuilles adhésives sur la surface de traitement de décollage (L) de chacune des feuilles adhésives les unes sur les autres, où la feuille de base (B) a une forme plane dans laquelle un trou est formé au centre dans le plan, et la forme d'un bord extérieur de celui-ci est sensiblement circulaire,
où la surface adhésive (A) est formée d'un certain nombre de parties à agent adhésif (A1) comportant un agent adhésif appliqué de manière dispersée,
**caractérisée en ce que**
la surface adhésive (A) présente des régions à espacement étroit et large des parties à agent adhésif (A1) les unes par rapport aux autres, chacune des régions est disposée de manière dispersée par paire et à une pluralité d'endroits, et au moins une paire des régions dispersées est disposée selon une symétrie axiale par rapport à une droite (D1, D2) passant par un centre (C) de la feuille de base (B), et selon une symétrie centrale par rapport au centre (C) de la feuille de base (B).

2. Feuille adhésive selon la revendication 1, dans laquelle les parties à agent adhésif (A1) ont chacune une forme plane sensiblement analogue à un point ou sensiblement analogue à une goutte d'eau, les parties à agent adhésif (A1) ayant sensiblement la même taille.

3. Feuille adhésive selon la revendication 1, dans laquelle les parties à agent adhésif (A1) ont chacune une forme plane sensiblement analogue à un point ou sensiblement analogue à une goutte d'eau, les parties à agent adhésif (A1) se présentant sous la forme d'une combinaison de parties à agent adhésif (A1) de différentes tailles grandes et petites.

4. Feuille adhésive selon l'une quelconque des revendications 1 à 3, comprenant une région où l'espacement entre les parties à agent adhésif (A1) les unes par rapport aux autres est conçu pour être sensiblement égal.

5. Feuille adhésive selon l'une quelconque des revendications 1 à 4, dans laquelle la feuille de base (B) a une forme plane avec un trou formé au centre dans le plan, et il n'y a aucune partie à agent adhésif (A1) dans une circonférence intérieure et/ou extérieure de la feuille de base (B).

6. Feuille adhésive selon l'une quelconque des revendications 1 à 5, dans laquelle la somme de l'aire des parties à agent adhésif (A1) est fixée à 30 pour cent ou plus de l'aire de la feuille de base (B), et à moins de 75 pour cent de l'aire de la feuille de base (B).

7. Stratifié (P1), comprenant: des feuilles adhésives stratifiées, chaque feuille adhésive étant conforme à l'une quelconque des revendications 1 à 6, dans lequel les feuilles adhésives sont stratifiées dans un état où la position des parties à agent adhésif (A1) de chaque feuille adhésive est une position où elles sont empilées ensemble le long d'une direction de stratification.
